(19) Europäisches Patentamt
European Patent Office
Office européen des brevets

(11) **EP 0 939 515 A1**

(12) **EUROPÄISCHE PATENTANMELDUNG**

(43) Veröffentlichungstag:
**01.09.1999 Patentblatt 1999/35**

(51) Int. Cl.⁶: **H04L 12/24**

(21) Anmeldenummer: 98102826.9

(22) Anmeldetag: **18.02.1998**

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(71) Anmelder:
**SIEMENS AKTIENGESELLSCHAFT**
**80333 München (DE)**

(72) Erfinder: **Michael, Frank, Dr.**
**81371 München (DE)**

(54) **Verfahren und Netzelement zum Weiterleiten von Ereignisnachrichten**

(57) Erläutert wird ein Verfahren zum Betreiben eines Telekommunikationsnetzes, bei dem ein Netzelement an einem Netzknoten eines Telekommunikationsnetzes von einem Vermittlungsrechner (10) gesteuert wird. Im Rechner werden Ereignisnachrichten (E) erzeugt, die Angaben über beim Betrieb des Rechners auftretende Ereignisse enthalten. Beim Weiterleiten der Ereignisnachrichten wird eine Reihenfolge von Zielen verwendet, in der jedes Ziel nur einmal vorkommt. Bedingungen für die Ziele werden an Hand der Angaben in den Ereignisnachrichten (E) in der durch die Reihenfolge vorgegebenen Abfolge geprüft.

Fig.1

EP 0 939 515 A1

**Beschreibung**

Die Erfindung betrifft ein Verfahren zum Betreiben eines Telekommunikationsnetzes, kurz Tk-Netz genannt, bei dem ein Netzelement an einem Netzknoten des Tk-Netzes von einem Vermittlungsrechner gesteuert wird. Das Netzelement ist beispielsweise eine Vermittlungsstelle, eine Konzentratoreinheit zum Anschluß mehrerer Teilnehmer an eine Übertragungsstrecke oder im Falle eines ATM-Netzes (Asynchronous Transfer Mode) ein sogenannter Cross-Connector. Der Vermittlungsrechner des Netzelementes erzeugt im Betrieb Ereignisnachrichten, die Angaben über aufgetretene Ereignisse enthalten. Eine Ereignisnachricht wird an ein vorgegebenes Ziel nur dann weitergeleitet, wenn mindestens eine für dieses Ziel festgelegte Bedingung durch die Angaben in der weiterzuleitenden Ereignisnachricht erfüllt wird. Ziele sind Protokolldateien auf dem die Ereignisnachrichten aussendenden Netzelement oder Bedienrechner zum Führen des Tk-Netzes.

Ein derartiges Verfahren ist im Standard X.734 (1992), "Information Technology - Open Systems Interconnection - Systems Management - Event Report Management Function" erläutert. Der Standard X.734 wurde von der ITU-T (International Telecommunication Union), früher CCITT (International Telegraph and Telephone Consultative Committee) veröffentlicht. Gemäß Standard X.734 werden sogenannte Diskriminatoren verwendet, zu denen jeweils mindestens eine Bedingung und mindestens ein Ziel gehört. Beim Bearbeiten einer weiterzuleitenden Ereignisnachricht muß für jeden Diskriminator geprüft werden, ob seine Bedingung bzw. eine seiner Bedingungen durch die weiterzuleitende Ereignisnachricht erfüllt ist. Ist eine Bedingung eines Diskriminators erfüllt, so wird das bzw. werden die zu diesem Diskriminator gehörenden Ziele in einer Ergebnisdatei gespeichert. Nachdem alle Diskriminatoren die weiterzuleitende Ereignisnachricht geprüft haben, werden die in der Zieldatei enthaltenen Ziele geordnet. Anschließend werden bei mehrfach enthaltenen Zielen alle Ziele bis auf ein Ziel gestrichen. Durch diese Maßnahme wird verhindert, daß die Ereignisnachricht mehrfach an dasselbe Ziel weitergeleitet wird.

Nachteilig an dem bekannten Verfahren ist, daß für das Sortieren und das Streichen von mehrfach vorhandenen Zielen zusätzliche Verfahrensschritte benötigt werden. Dies ist insbesondere deshalb nachteilig, weil pro Sekunde mehrere Hundert Ereignisnachrichten auftreten können, die von mehreren Tausend Diskriminatoren ausgewertet werden müssen.

Es ist Aufgabe der Erfindung, ein einfaches Verfahren zum Weiterleiten von Ereignisnachrichten anzugeben, das ein schnelles Weiterleiten einer Vielzahl von Ereignisnachrichten gestattet.

Diese Aufgabe wird durch ein Verfahren mit den im Patentanspruch 1 angegebenen Verfahrensschritten gelöst. Weiterbildungen sind in den Unteransprüchen angegeben.

Die Erfindung geht von der Erkenntnis aus, daß bei einem einfachen Verfahren zum Weiterleiten der Ereignisnachrichten Mehrfachberechnungen und das aufwendige Sortieren der Ziele beim Weiterleiten jeder Ereignisnachricht vermieden werden müssen. Deshalb werden beim erfindungsgemäßen Verfahren die Ziele nur einmal vor dem Beginn des Verfahrens sortiert, so daß eine Reihenfolge entsteht, in der jedes Ziel genau einmal vorkommt. Diese Reihenfolge wird dann zum Bearbeiten einer Vielzahl von Ereignisnachrichten verwendet. Die Reihenfolge muß nur geändert werden, wenn neue Ziele hinzukommen oder alte Ziele nicht mehr gültig sind. Weil das Sortieren der Ziele bereits vor dem Entstehen der Ereignisnachrichten abgeschlossen ist, können die Ereignisnachrichten beim erfindungsgemäßen Verfahren sehr schnell weitergeleitet werden.

Beim erfindungsgemäßen Verfahren wird in der durch die Reihenfolge der Ziele vorgegebenen Abfolge für jedes Ziel die Bedingung geprüft. Wenn die Bedingung erfüllt ist, wird das Ziel in die Zieldatei eingetragen. Nach dem Bearbeiten aller Ziele sind die Ziele in der Zieldatei bereits geordnet. Dies trifft auch dann zu, wenn es für ein Ziel mehrere alternative Bedingungen gibt.

Beim erfindungsgemäßen Verfahren werden die Ziele übergreifend über die durch die Diskriminatoren vorgegebenen Grenzen geordnet. Auch die Bedingungen werden dann den einzelnen Zielen über die Grenzen der Diskriminatoren hinweg zugeordnet. Das bedeutet, daß zu einem Ziel auch Bedingungen verschiedener Diskriminatoren gehören können. Die Bedingungen zu einem Ziel bilden dann einen Bedingungssatz.

In einer Weiterbildung der Erfindung wird das Prüfen der Bedingungen innerhalb eines Bedingungssatzes abgebrochen, sobald eine Bedingung durch die Angaben in der weiterzuleitenden Ereignisnachricht erfüllt ist. Diese Maßnahme beruht auf der Erkenntnis, daß die Ereignisnachricht nur einmal an ein Ziel weitergeleitet werden muß. Da die Bedingungen des Bedingungssatzes Alternativen sind, reicht es, die Ereignisnachricht an das zugehörige Ziel zu senden, sobald nur eine der Bedingungen erfüllt ist.

Werden die Bedingungen des Bedingungssatzes darüber hinaus in einer Reihenfolge geprüft, bei der die Bedingungen danach geordnet sind, wie oft sie durch die Angaben in weiterzuleitenden Ereignisnachrichten erfüllt sind, so wird das Prüfen der Bedingungen eines Bedingungssatzes in den meisten Fällen schon nach dem Prüfen der ersten Bedingung oder nach dem Prüfen der ersten beiden Bedingungen abgebrochen. Nur in ganz seltenen Fällen sind alle Bedingungen des Bedingungssatzes zu prüfen. Der Prüfaufwand und damit die Anzahl der Verfahrensschritte verringert sich durch diese Maßnahme weiter.

Die Reihenfolge der Ziele wird in einem Ausführungsbeispiel durch eine Liste verketteter Elemente festgelegt. Die Elemente enthalten jeweils einen Andreßverweis auf das nachfolgende Element. Durch das Verändern der Adreßverweise ist es leicht möglich, Elemente in die Liste einzufügen oder Elemente aus der Liste zu entfernen. Jedem Element der Liste ist genau ein Ziel der Reihenfolge zugeordnet. Anstelle der Liste kann auch eine Tabelle oder eine andere geeignete Datenstruktur verwendet werden.

In einer anderen Weiterbildung des erfindungsgemäßen Verfahrens, bei dem gemäß mindestens einer Bedingung aus den Angaben in den Ereignisnachrichten ermittelte Zwischenergebnisse durch logische Operationen verknüpft werden, wird eine Boolesche-Tabelle verwendet, die bereits vor dem Erzeugen der Ereignisnachrichten im Speicher des Rechners gespeichert wird. Mittels der Booleschen-Tabelle können die Zwischenergebnisse dann gemäß der in der Bedingung vorgegebenen logischen Operation sehr schnell verknüpft werden. Es ist lediglich eine Speicherzelle zu lesen. Das Weiterleiten wird durch das Verwenden der Booleschen-Tabelle sehr einfach und sehr schnell.

Das erfindungsgemäße Verfahren wird in einer Weiterbildung dadurch schnell, daß Mehrfachberechnungen vermieden werden. Mittels eines Prüfkennzeichens für jede Bedingung werden Bedingungen vermerkt, die bereits berechnet worden sind. Außerdem wird das Ergebnis der Berechnung vermerkt. Muß eine Bedingung während des Verfahrens nochmals geprüft werden, so wird an Hand des Prüfkennzeichens erkannt, daß diese Bedingung bereits geprüft worden ist. Es ist nur noch das bereits ermittelte Prüfergebnis zu verwenden. Ein nochmaliges Prüfen entfällt. Ein ähnliches Verfahren wird auch für die Zwischenergebnisse verwendet, bei denen an Hand eines Merkzeichens Mehrfachberechnungen verhindert werden.

Die durch den oben erwähnten Standard X.734 gestellten Forderungen lassen sich auch beim erfindungsgemäßen Verfahren erfüllen, wenn die Ziele und die Bedingungen im Vermittlungsrechner so verwaltet werden, daß ihre Zuordnung zu Datenobjekten jederzeit möglich ist, deren Daten mindestens eine Bedingung und mindestens ein Ziel enthalten. Diese Datenobjekte entsprechen den im Standard X.734 genannten Diskriminatoren. Bei dieser Weiterbildung des erfindungsgemäßen Verfahrens können die Ziele und die Bedingungen mittels mindestens eines Bedienrechners gewartet werden, der die im Standard X.734 vorgegebene Datenstruktur erwartet, d.h. Diskriminatoren.

Die Erfindung betrifft außerdem ein Netzelement, das insbesondere zum Durchführen des erfindungsgemäßen Verfahrens verwendet wird. Die oben genannten technischen Wirkungen gelten deshalb auch für dieses Netzelement.

Im folgenden werden Ausführungsbeispiele der Erfindung an Hand der beiliegenden Zeichnungen erläutert. Darin zeigen:

Figur 1          das Weiterleiten von Ereignisnachrichten,

Figur 2          eine beim Weiterleiten einer Ereignisnachricht verwendete Datenstruktur,

Figur 3          eine beim Berechnen eines Filters verwendete Datenstruktur,

Figuren 4a, 4b   ein Flußdiagramm der beim Weiterleiten der Ereignisnachricht ausgeführten Verfahrensschritte, und

Figur 5          ein Flußdiagramm der beim Berechnen eines Filters ausgeführten Verfahrensschritte.

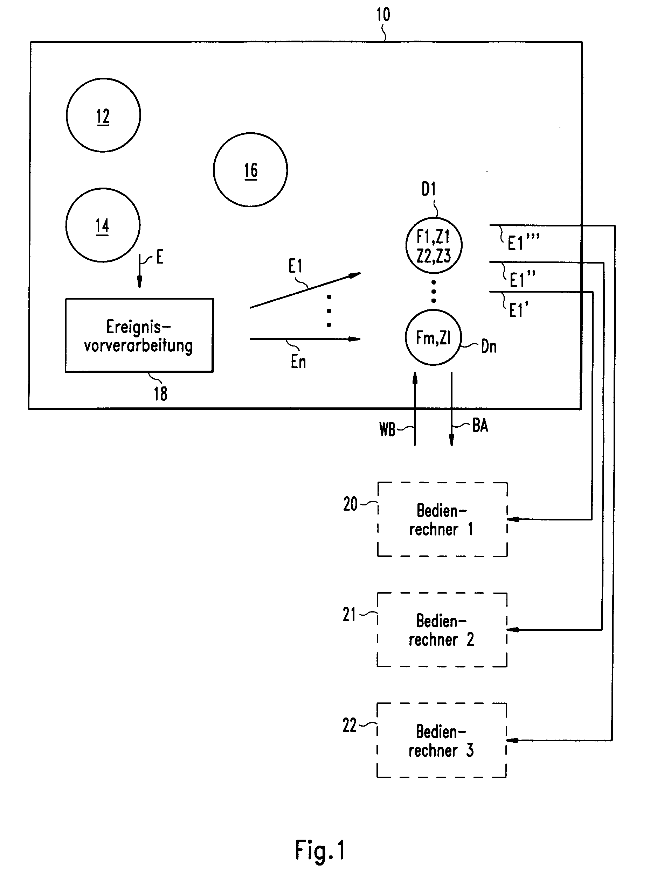

Figur 1 zeigt das Weiterleiten einer Ereignisnachricht E gemäß oben erwähntem Standard X.734. Die Ereignisnachricht E wird in einem Vermittlungsrechner 10 erzeugt, der eine nicht dargestellte Vermittlungsstelle steuert. Im Speicher des Vermittlungsrechners 10 sind viele Datenobjekte gespeichert, von denen in Figur 1 drei Objekte 12, 14 und 16 dargestellt sind. Die Objekte 12, 14 und 16 enthalten Daten und Verfahren zum Bearbeiten ihrer Daten. Beispielsweise sind in den Daten des Objektes 12 die Daten eines bestimmten Teilnehmers gespeichert. Beim Betreiben des Vermittlungsrechners 10 werden Ereignisnachrichten von den Objekten 12, 14 und 16 erzeugt, beispielsweise wenn ein Verfahren zum Bearbeiten der Daten eines der Objekte 12, 14 oder 16 von einem im Vermittlungsrechner 10 enthaltenen Mikroprozessor ausgeführt wird. Die Ereignisnachricht E wird vom Objekt 14 als Bestätigung auf eine vom Objekt 14 bearbeitete Nachricht erzeugt.

Eine Ereignisverarbeitungseinheit 18, die beispielsweise als Programm im Vermittlungsrechner 10 realisiert ist, bearbeitet die Ereignisnachricht E. Beim Abarbeiten dieses Programms vervielfältigt die Ereignisverarbeitungseinheit 18 die Ereignisnachricht E zu Ereignisnachrichten E1 bis En, die an sogenannte Diskriminatoren D1 bis Dn verteilt werden, wobei n eine natürliche Zahl ist, die von 1 bis zur Anzahl der Diskriminatoren n läuft.

Die Diskriminatoren D1 bis Dn arbeiten alle nach demselben Verfahren, so daß nur der Diskriminator D1 erläutert wird. Der Diskriminator D1 wird durch im Speicher des Vermittlungsrechners 10 gespeicherte Befehle realisiert, die vom Mikroprozessor abgearbeitet werden. Beim Bearbeiten der Ereignisnachricht E1 im Diskriminator D1 wird geprüft, ob in der Ereignisnachricht E1 enthaltene Angaben eine Bedingung erfüllen, die durch einen Filter F1 vorgegeben ist. Ist die Bedingung F1 durch die Angaben in der Ereignisnachricht E1 erfüllt, so wird die Ereignisnachricht E1 durch Ereignisnachrichten E1', E1'' und E1''' an Bedienrechner 20, 21 und 22 weitergeleitet, deren Zieladressen Z1, Z2 und Z3 im Diskriminator D1 angegeben sind.

Der Diskriminator Dn enthält einen Filter Fm und eine Zieladresse Zl, dabei ist m eine natürliche Zahl, die der Anzahl der Filter F1 bis Fm in den Diskriminatoren D1 bis Dn entspricht und l ist die Anzahl der Zieladressen Z1 bis Zl, die in den Diskriminatoren D1 bis Dn angegeben sind. Die Werte n, m und l können unterschiedlich sein, weil in den Diskriminatoren D1 bis Dn teilweise mehrere Filter F1 bi Fm und/oder mehrere Zieladressen Z1 bis Zl angegeben sind. Die Zieladresse Z1 bis Zl eines bestimmten Zielrechners kann in verschiedenen Diskriminatoren D1 bis Dn auftreten. Auch die durch die Filter F1 bis Fm verschiedener Diskriminatoren D1 bis Dn festgelegten Bedingungen können übereinstimmen.

Vom entfernten Bedienrechner 20 aus können mittels Wartungsbefehle WB beispielsweise neue Diskriminatoren D1 bis Dn im Vermittlungsrechner 10 erzeugt werden. Das Erzeugen eines neuen Diskriminators D1 bis Dn wird mit einer Bestätigungsantwort BA bestätigt, die vom Vermittlungsrechner 10 zum Bedienrechner 20 gesendet wird. Zusätzlich werden gegebenenfalls Bestätigungsnachrichten an die anderen Bedienrechner 21 und 22 gesendet.

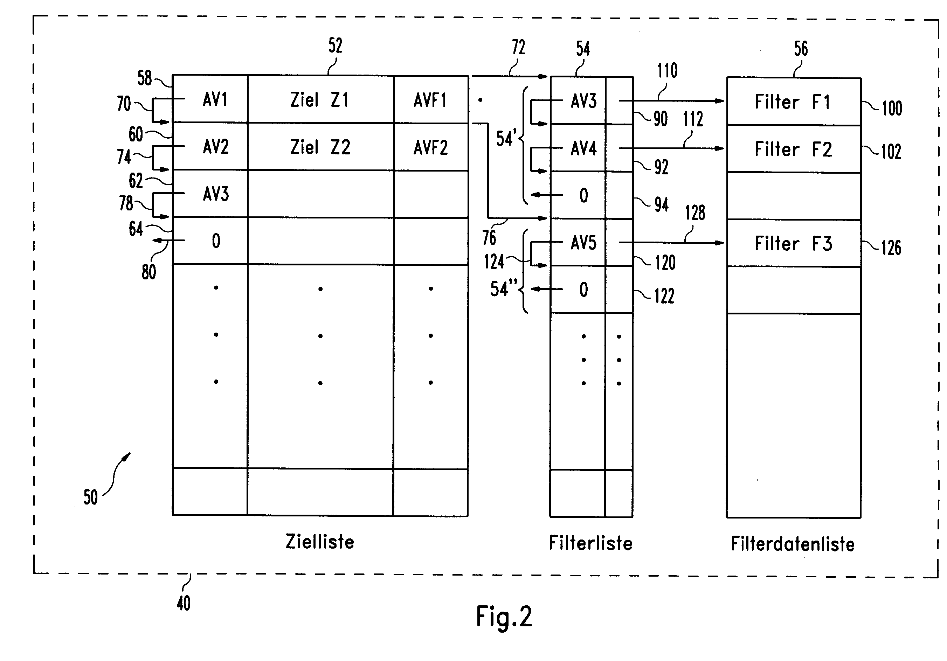

Durch das im folgenden anhand der Figuren 2 bis 5 erläuterte Verfahren, das nicht im Standard X.734 angesprochen ist und das von dem anhand der Figur 1 erläuterten Verfahren abweicht, wird erreicht, daß die Ereignisnachricht E an jedes Ziel Z1 bis Zl, dessen Bedingungen F1 bis Fm erfüllt sind, nur einmal gesendet wird.

Figur 2 zeigt eine beim Weiterleiten der Ereignisnachricht gemäß Figur 1 verwendete Datenstruktur 50, die im Speicher 40 des Vermittlungsrechners 10 gespeichert ist. Die Datenstruktur 50 enthält eine Zielliste 52, Filterlisten 54 und eine Filterdatenliste 56. Die Zielleiste 52 enthält vier Listen-Elemente 58 bis 64. Die Elemente 58 bis 64 haben den gleichen Aufbau aber unterschiedliche Inhalte. Das Element 58 enthält im ersten Datenfeld einen Adreßverweis AV1 auf das in der Liste 52 folgende Element 60, vgl. auch Pfeil 70. In einem zweiten Datenfeld des Elements 58 ist die Zieladresse des Ziels Z1 vermerkt. Ein drittes Datenfeld enthält einen Adreßverweis AVF1 eine erste Filterliste 54', die zum Ziel Z1 gehört, vgl. Pfeil 72.

Das Element 60 enthält im ersten Datenfeld einen Adreßverweis AV2 auf das in der Zielliste 52 dem Element 60 folgende Element 62, vgl. Pfeil 74. Das Element 60 betrifft das Ziel Z2, dessen Zieladresse im zweiten Datenfeld des Elements 60 gespeichert ist. Im dritten Datenfeld des Elements 60 ist ein Adreßverweis AVF2 auf das erste Element einer zum Ziel Z2 gehörenden zweiten Filterliste 54" gespeichert. Im dritten Element 62 verweist ein Adreßverweis AV3 auf das letzte Element 64 der Zielliste 52. Das letzte Element 64 wird durch einen sogenannten Nullzeiger gekennzeichnet, der durch die Adresse 0 im ersten Datenfeld dargestellt wird, vgl. Pfeil 80.

Die erste Filterliste 54' enthält drei Elemente 90, 92 und 94, in denen jeweils zwei Adreßverweise enthalten sind. Der erste Adreßverweis AV3 im Element 90 verweist auf die Adresse des Elementes 92. Der erste Adreßverweis AV4 im Element 92 verweist auf das nächste Element 94. Weil das Element 94 das letzte Element der Filterliste 54' ist, enthält es den Nullzeiger durch die Adresse 0 gekennzeichneten Nullzeiger.

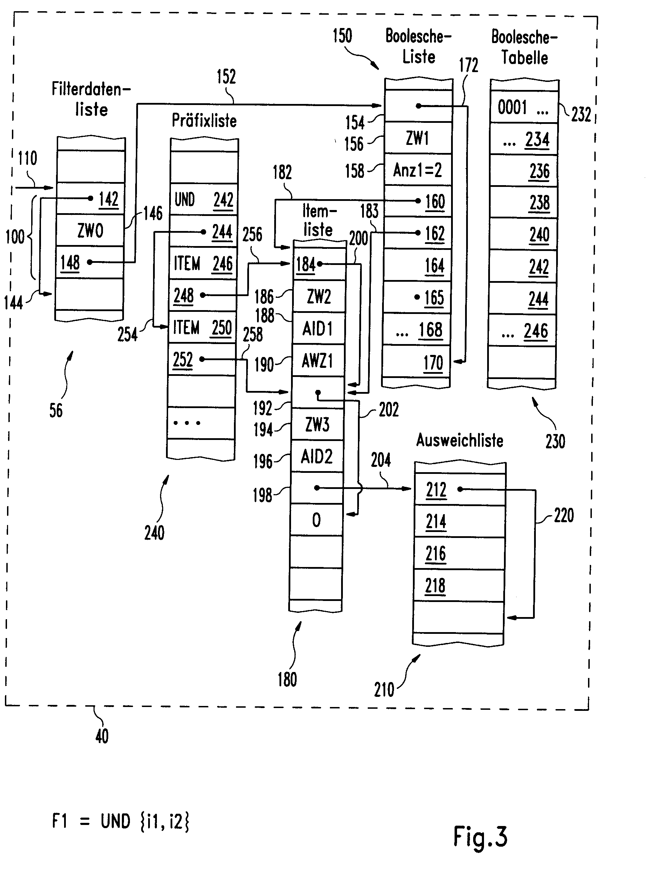

Der zweite Adreßverweis im Element 90 zeigt auf in der Filterdatenliste 100 enthaltene Filterdaten 100 des ersten Filters F1, vgl. Pfeil 110. Der zweite Adreßverweis im Element 92 weist dagegen auf die Filterdaten 102 des Filters F2, vgl. Pfeil 112. Die Filterdaten 100, 102 in der Filterliste 56 sind gleich strukturiert, so daß unten an Hand der Figur 3 nur die Filterdaten 100 erläutert werden.

Die Filterliste 54" enthält zwei Elemente 120 und 122. Ein erster Adreßverweis AV5 im Element 120 verweist auf das Element 122, vgl. auch Pfeil 124. Der erste Adreßverweis im Element 122 ist der das Ende der Filterliste 54" kennzeichnende Nullzeiger mit der Adresse 0. Der zweite Adreßverweis im Element 120 verweist abweichend vom Beispiel in Figur 1 auf Filterdaten 126 des Filters F3, vgl. Pfeil 128. Die durch die Pfeile 110, 112 und 128 angedeuteten Verweise können sich auch überkreuzen. Außerdem sind Verweise auf den gleichen Filter aus verschiedenen Filterlisten 54', 54" möglich.

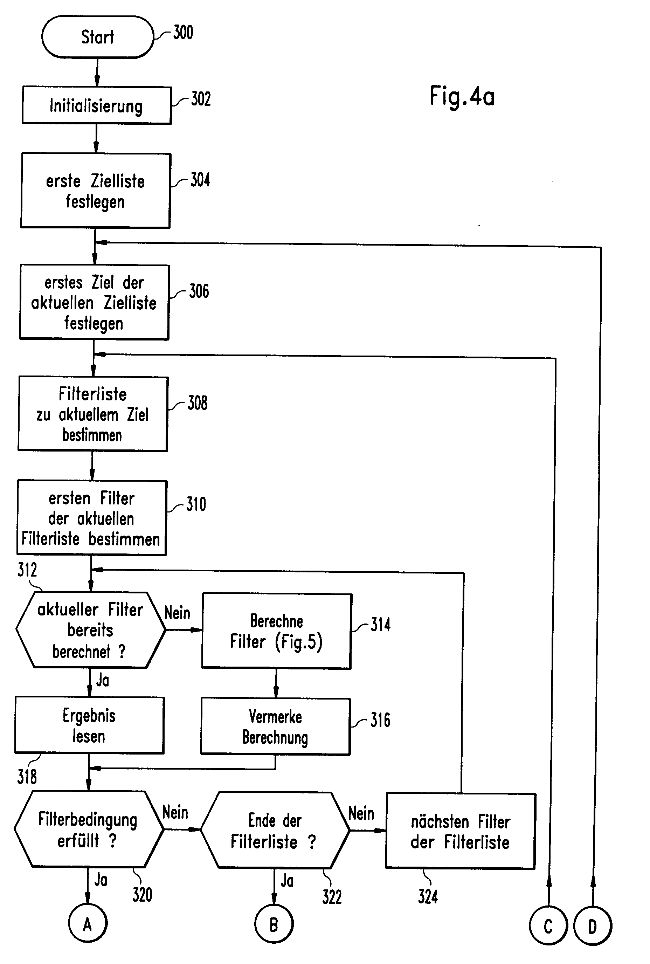

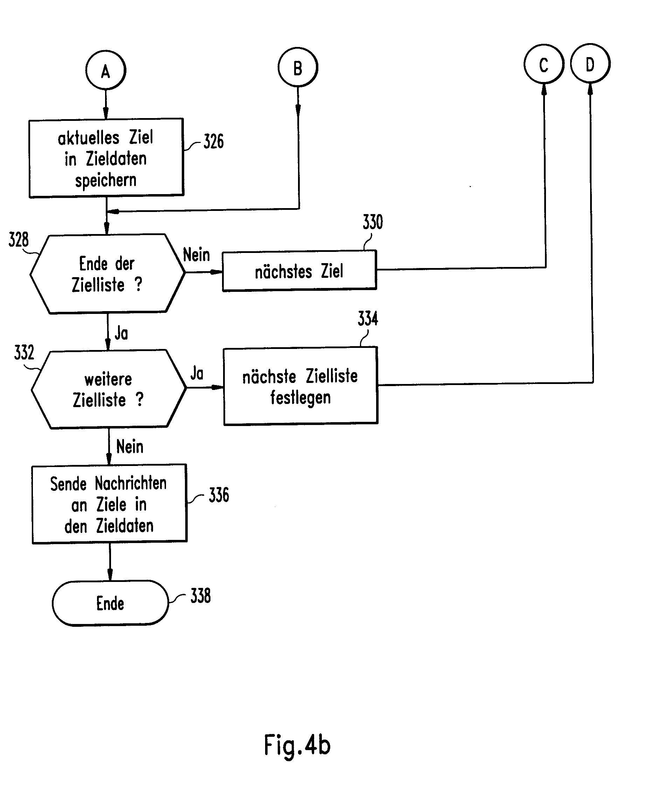

Die Listenstrukturen der Zielliste 52, der Filterliste 54 und der Filterdatenliste 56 erlauben es, Änderungen beim Einrichten neuer Diskriminatoren D1 bis Dn auf einfache Art durchzuführen. Es müssen lediglich die Adreßverweise AV1 bis AV5 verändert zu werden, um zusätzliche Elemente in die Listen 52, 54 und 56 einzufügen oder um aus den Listen 52, 54 bis 56 Elemente zu entfernen. An Hand der Figuren 4a und 4b wird unten erläutert, wie die Daten der Datenstruktur 50 beim Bearbeiten einer Ereignisnachricht EN verwendet werden.

Figur 3 zeigt die Filterdaten 100 und die zum Filter F1 gehörenden Datenstrukturen. In einem ersten Datenfeld 142 der Filterdaten 100 wird ein Adreßverweis auf das nächste Element der Filterdatenliste 56 gespeichert, vgl. Pfeil 144. Ein zweites Datenfeld 146 der Filterdaten 100 enthält einen Zählerwert ZWO, der angibt, wieviele Diskriminatoren D1 bis Dn den Filter F1 enthalten. Wird ein neuer Diskriminator D1 bis Dn erzeugt, in welchem der Filter F1 enthalten ist, so wird der Zählerwert ZWO erhöht. Wird andererseits ein Diskriminator D1 bis Dn entfernt, der den Filter F1 enthält, so wird der Zählerwert ZWO verringert. Diese Maßnahme ist erforderlich, weil die Diskriminatoren D1 bis Dn verwaltet werden. Ein drittes Datenfeld 148 des Elements 142 enthält einen Adreßverweis auf eine zum Filter F1 gehörende Boolesche-Liste 150, vgl. Pfeil 152.

Die Filterbedingung des Filters F1 lautet:

$$F1 = UND\{i1, i2\},$$

wobei UND die logische UND-Verknüpfung, ODER die logische ODER-Verknüpfung und NICHT die logische NICHT-Verknüpfung symbolisieren. Sogenannte Items i1 und i2 enthalten Bedingungen, die durch die Angaben der Ereignisnachricht erfüllt sein müssen. Die Items i1 und i2 werden weiter unten noch genauer erläutert.

Jedes Element der Booleschen-Liste 150 hat im Ausführungsbeispiel die gleiche Anzahl von Datenfeldern. Diese Anzahl wird durch die maximale Zahl der in einem Filter F1 bis Fm auftretenden Items bestimmt. Ein erstes Datenfeld des in Figur 3 dargestellten Elements der Booleschen-Liste 150 enthält Datenfelder 154 bis 168. Ein Datenfeld 170 gehört bereits zum nächstfolgenden Element. Die Datenfelder 154 bis 170 haben im Speicher 40 unmittelbar aufeinanderfolgende Adressen.

Im Datenfeld 154 ist ein Adreßverweis auf das erste Datenfeld 170 des nächsten Elements der Booleschen-Liste 150 enthalten, vgl. Pfeil 172. Im Datenfeld 156 wird ein Zählerwert ZW1 gespeichert, der angibt, wieviele Diskriminatoren D1 bis Dn die Boolesche-Liste 150 nutzen. Im Datenfeld 158 wird die Anzahl Anz1 der Items im Filter F1 gespeichert, d.h. im Ausführungsbeispiel der Wert 2. In den Datenfeldern 160 bis 168 werden Adreßverweise auf die in einer Itemliste 180 enthaltenen Daten der Items gespeichert. Nur die Datenfelder 160 und 162 sind beim Filter F1 belegt, weil dieser Filter nur die zwei Items i1 und i2 hat. Im Datenfeld 160 ist ein durch einen Pfeil 182 angedeuteter Adreßverweis auf ein Element der Itemliste 180 für das Item i1 enthalten. Zum ersten Element der Itemliste 180 gehören vier Datenfelder 184 bis 190, deren Inhalt unten noch erläutert wird. Im Datenfeld 162 ist ein durch einen Pfeil 183 dargestellter Adreßverweis auf ein erstes Datenfeld eines zweiten Elements der Itemliste 180 für das Item i2 gespeichert. Zum zweiten Element gehören neben dem Datenfeld 192 noch Datenfelder 194, 196 und 198, deren Inhalt im folgenden ebenfalls noch erläutert wird. Der Inhalt der Datenfelder 184 bis 198 wird in dieser Reihenfolge in Speicherzellen des Speichers 40 mit aufeinanderfolgenden Adressen gespeichert.

Das Datenfeld 184 ist das erste Datenfeld eines Elements der Itemliste 180 und enthält deshalb einen Adreßverweis auf das nächste Element der Itemliste 180, vgl. Pfeil 200, der direkt auf das Datenfeld 192 weist. Im Datenfeld 186, d.h. im zweiten Datenfeld des Elements, wird ein Zählerwert ZW2 gespeichert, der angibt, in wievielen Filtern F1 bis Fn das Item i1 vorkommt. An Hand des Zählerwerts ZW2 wird beim Verwalten der Itemliste 180 festgestellt, wann das Element zum Item i1 entfernt werden kann. Dies ist erst dann der Fall, wenn der Zählerwert ZW2 den Wert 0 hat. Im Datenfeld 188 ist ein Kennzeichen AID1 eines Attributs gespeichert, auf welches sich das Item i1 bezieht. Im Datenfeld 190 wird ein Wert AWZ1 gespeichert, der dem Attribut im Item i1 zugewiesen ist.

In den Datenfeldern 192 bis 198 sind auf ähnliche Weise die Daten des Items i2 gespeichert. So wird im Datenfeld 192 ein Adreßverweis auf das nächste Element der Itemliste 180 gespeichert, vgl. Pfeil 202. Da das Item i2 das letzte Item der Itemliste 180 ist, verweist der Adreßverweis im Datenfeld 192 auf einen Nullzeiger, der durch den Adreßwert 0 gekennzeichnet ist und damit das letzte Element der Itemliste 180 kennzeichnet. Im Datenfeld 194 ist ein Zählerwert ZW3 gespeichert, dessen Wert angibt, in wievielen Filtern F1 bis Fm das Item i2 verwendet wird. Im Datenfeld 196 ist durch ein Kennzeichen AID2 vermerkt, auf welches Attribut sich das Item i2 bezieht. Im Datenfeld 198 ist ein Adreßverweis auf eine Ausweichliste 210 gespeichert, weil zur Wertzuweisung eines Wertes zum Attribut im Item i2 mehrere Daten notwendig sind, die nicht alle in einem Datenfeld gespeichert sind. Die notwendigen Daten sind in Datenfeldern 214, 216 und 218 der Ausweichliste 210 gespeichert. Im Datenfeld 212 ist ein Adreßverweis auf das nächste Element der Ausweichliste 210 gespeichert, vgl. Pfeil 220.

Im Speicher 40 ist der Booleschen-Liste 150 außerdem eine Boolesche-Tabelle 230 zugeordnet, beispielsweise durch nicht dargestellte Verweise oder durch einen festen Adreßoffset. Datenfelder 232 bis 246 enthalten jeweils ein Byte, dessen Bitstellen für bestimmte Kombinationen von Itemwerten i1 und i2 den Wert des Filters F1 enthalten. Für den einfachen Filter F1 sind nur vier Bitstellen notwendig. Erfüllen die Angaben in der Ereignisnachricht E nicht die in den Items i1 und i2 angegebenen Bedingungen, d.h. es gilt i1=0 und i2=0, so hat der Filter F1 den Wert 0. Ist eines der beiden Items i1 oder i2 durch die Angaben in der Ereignisnachricht E nicht erfüllt, so hat der Filter F1 ebenfalls den Wert 0, d.h. die Filterbedingung ist nicht erfüllt. Nur wenn beide Items i1 und i2 durch die Angaben in der Ereignisnachricht E erfüllt sind, hat der Filter F1 den Wert 1, d.h. die Filterbedingung ist erfüllt. Aus diesem Grund ist im vierten Bit des Datenfeldes 232 eine 1 gespeichert. Bei drei Items in einem Filter F1 bis Fm sind acht Bits in der Booleschen-Tabelle 230 erforderlich. Die Zahl der erforderlichen Bits in der Booleschen-Tabelle 230 steigt mit zunehmender Anzahl von Items i1 bis i1 exponentiell an.

Weiterhin ist im Speicher 40 eine sogenannte Präfixliste 240 gespeichert, die dazu verwendet wird, den Filter F1 wieder zu rekonstruieren, wenn eine dahingehende Abfrage vom Bedienrechner 20 kommt, vgl. Figur 1. Zwischen der Präfixliste 240 und der Filterdatenliste 56 gibt es eine fest Beziehung, so daß beispielsweise den Filterdaten 100 der dargestellte Ausschnitt der Präfixliste zugeordnet ist. Der Filter F1 ist in Datenfeldern 242 bis 252 der Präfixliste 240 hinterlegt. Im Datenfeld 242 ist die Operation UND verschlüsselt. Ein nachfolgender Adreßverweis im Datenfeld 244 zeigt auf das letzte Item, das von der UND-Operation erfaßt wird, d.h. auf das Item i2, vgl. Pfeil 254. Im Datenfeld 246 ist vermerkt, daß nun im Filter F1 ein Item folgt. Ein Adreßverweis im Datenfeld 248, vgl. Pfeil 256, verweist auf das Item i1 in der Itemliste 180. Im Datenfeld 250 ist wiederum der Hinweis auf ein Item vermerkt. Ein Adreßverweis im Datenfeld 252 verweist auf das zugehörige Item i2 in der Itemliste 180.

Die Figuren 4a und 4b zeigen ein Flußdiagramm der beim Weiterleiten der Ereignisnachrichten E ausgeführten Verfahrensschritte. Beim Erläutern der Figuren 4a und 4b wird auch auf die Figuren 1 bis 3 Bezug genommen. Das Verfahren beginnt in einem Schritt 300. In einem Schritt 302 werden Initialisierungen durchgeführt, wobei beispielsweise beim Verfahren verwendete Hilfsvariablen auf definierte Anfangswerte gesetzt werden.

Im folgenden Verfahrensschritt 304 wird eine erste Zielliste festgelegt, beispielsweise die Zielliste 52. Im Speicher 40 sind nämlich mehrere Ziellisten gespeichert, die nacheinander abzuarbeiten sind. So gibt es eigene Ziellisten für Ersatzziele, die nur benachrichtigt werden sollen, wenn bestimmte Ziele nicht erreichbar sind. Weiterhin werden Ziellisten unterschieden, in denen Ziele enthalten sind, welche die Nachrichten bestätigen oder in denen Ziele enthalten sind, welche die Nachrichten nicht bestätigen.

Im Verfahrensschritt 306 wird das erste Ziel der aktuellen Zielliste festgelegt, beispielsweise das Ziel Z1 der Zielliste 52. Im folgenden Verfahrensschritt 308 wird mit Hilfe der in der Zielliste gespeicherten Adreßverweise die Filterliste zum aktuellen Ziel bestimmt. Für das erste Ziel Z1 der Zielliste 52 wird der Adreßverweis AVF1 verwendet, der auf die Filterliste 54' zeigt.

Anschließend wird in einem Verfahrensschritt 310 der erste Filter der aktuellen Filterliste bestimmt. Dies ist für die Filterliste 54' der Filter F1.

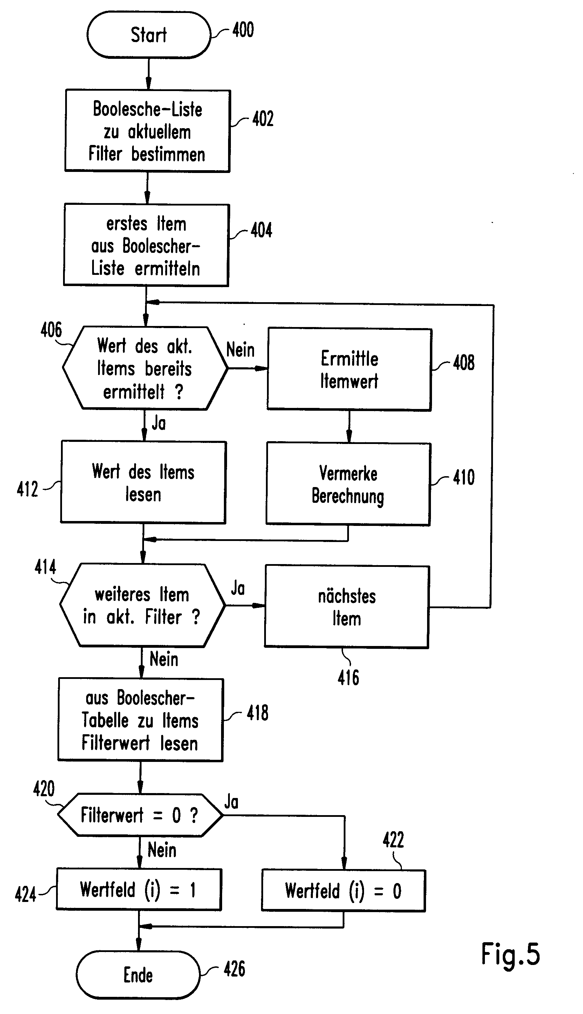

In einem Verfahrensschritt 312 wird anhand eines im Speicher 40 gespeicherten Prüfkennzeichens ermittelt, ob der aktuelle Filter bereits berechnet worden ist. Hat das Prüfkennzeichen für den aktuellen Filter den Wert 0, so bedeutet dies, daß der Filter noch nicht berechnet worden ist. In diesem Fall wird in einem Verfahrensschritt 314 der Filter berechnet. Die dabei ausgeführten Verfahrensschritte werden unten an Hand der Figur 5 noch genauer erläutert. Danach wird das Prüfkennzeichen des aktuellen Filters auf den Wert 1 gesetzt, um die Berechnung dieses Filters zu vermerken, vgl. Verfahrensschritt 316. Wird im Verfahrensschritt 312 dagegen festgestellt, daß der aktuelle Filter bereits berechnet worden ist, d.h. das zu diesem Filter gehörende Prüfkennzeichen hat den Wert 1, so folgt unmittelbar nach dem Verfahrensschritt 312 ein Verfahrensschritt 318. Im Verfahrensschritt 318 wird aus einem Wertfeld im Speicher 40 das Ergebnis für den aktuellen Filter ausgelesen.

Unmittelbar nach dem Schritt 316 bzw. unmittelbar nach dem Schritt 318 folgt ein Verfahrensschritt 320, in dem geprüft wird, ob die Filterbedingung des aktuellen Filters erfüllt ist. Ist dies nicht der Fall, so folgt unmittelbar nach dem Verfahrensschritt 320 ein Verfahrensschritt 322, in dem geprüft wird, ob das Ende der aktuellen Filterliste bereits erreicht ist. Das Ende der Filterliste ist erst erreicht, wenn der Nullzeiger 0 in der Filterliste auftritt. Ist dies noch nicht der Fall, so wird an Hand der Filterliste 54 der nächste Filter bestimmt, beispielsweise der Filter F2. Dies erfolgt in einem Verfahrensschritt 324. Anschließend wird das Verfahren im Schritt 312 fortgesetzt. Somit befindet sich das Verfahren in einer Schleife aus den Verfahrensschritten 312 bis 324. Diese Schleife wird solange abgearbeitet, bis entweder im Schritt 320 eine aktuelle Filterbedingung erfüllt ist oder bis das Ende der Filterliste im Schritt 322 festgestellt wird.

Wird im Verfahrensschritt 320 festgestellt, daß die Filterbedingung erfüllt ist, so folgt unmittelbar ein Verfahrensschritt 326, der nicht mehr zu Schleife aus den Verfahrensschritten 312 bis 324 gehört. Das bedeutet, daß das Abarbeiten einer Filterliste unterbrochen wird, sobald eine Filterbedingung erfüllt ist. Im Verfahrensschritt 326 wird die Adresse des aktuellen Ziels in einem Speicher für die Zieldaten gespeichert, beispielsweise in einer Datei. Danach folgt ein Schritt 328.

Wird die Schleife aus den Verfahrensschritten 312 bis 324 dagegen im Schritt 322 verlassen, weil das Ende der aktuellen Filterliste erreicht ist, so folgt unmittelbar nach dem Schritt 322 der Verfahrensschritt 328. In diesem Fall wird kein neues Ziel in der Datei für die Zieldaten gespeichert.

Im Verfahrensschritt 328 wird ermittelt, ob bereits das Ende der Zielliste 52 erreicht ist. Dies ist der Fall, wenn ein Adreßverweis AV auf einen Nullzeiger 0 zeigt. Ist das Ende der Zielliste nicht erreicht, so wird das nächste Ziel der Zielliste ermittelt, beispielsweise das Ziel Z2 der Zielliste 52, vgl. Verfahrensschritt 330. Anschließend wird das Verfahren im Schritt 308 mit dem Abarbeiten der zugehörigen Filterliste fortgesetzt. Das Verfahren befindet sich nun in einer Schleife aus den Verfahrensschritten 308 bis 330. Diese Schleife wird erst im Verfahrensschritt 328 verlassen, wenn die Zielliste vollständig abgearbeitet worden ist. Ist dies der Fall, so folgt unmittelbar nach dem Verfahrensschritt 328 ein Verfahrensschritt 332.

Im Verfahrensschritt 332 wird ermittelt, ob eine weitere Zielliste bearbeitet werden muß. Ist dies der Fall, so folgt unmittelbar nach dem Verfahrensschritt 332 ein Verfahrensschritt 334, in welchem die nächste Zielliste festgelegt wird. Danach wird das Verfahren im Schritt 306 fortgesetzt. Somit befindet sich das Verfahren in einer Schleife aus den Verfahrensschritten 306 bis 334. Diese Schleife wird im Schritt 332 erst dann verlassen, wenn sämtliche zu bearbeitende Ziellisten abgearbeitet sind. Ist dies der Fall, so folgt unmittelbar nach dem Verfahrensschritt 332 ein Verfahrensschritt 336.

Im Verfahrensschritt 336 wird die gerade bearbeitete Ereignisnachricht E an alle Ziele gesendet, die in der Zieldatei vermerkt sind. Danach wird das Verfahren in einem Schritt 338 beendet.

Figur 5 zeigt ein Flußdiagramm der beim Berechnen eines Filters ausgeführten Verfahrensschritte, vgl. auch Schritt 314 gemäß Figur 4a. Beim Erläutern der Figur 5 werden auf die Figuren 1 bis 3 Bezug genommen. Das Verfahren beginnt in einem Verfahrensschritt 400. In einem Verfahrensschritt 402 wird die Boolesche-Liste für den aktuell bearbeiteten Filter bestimmt, beispielsweise die Boolesche-Liste 150 für den Filter F1. In einem folgenden Verfahrensschritt 404 wird mittels der aktuellen Booleschen-Liste und der Itemliste 180 das erste Item ermittelt, beispielsweise das Item i1.

In einem folgenden Verfahrensschritt 406 wird an Hand eines Merkzeichens für das aktuelle Item festgestellt, ob das aktuelle Item bereits bearbeitet worden ist. Hat das Merkzeichen für das aktuelle Item den Wert 0, so wird in einem Verfahrensschritt 408 ermittelt, ob die Angaben in der zu bearbeitenden Ereignisnachricht E die im aktuellen Item angegebene Bedingung erfüllen. Dabei wird wiederum die Itemliste 180 und gegebenenfalls auch die Ausweichliste 210 verwendet. Das Ergebnis dieser Prüfung wird dann in einem Verfahrensschritt 410 im Speicher 40 vermerkt. Außerdem erhält das Merkzeichen für das aktuelle Item den Wert 1.

Wird im Verfahrensschritt 406 dagegen festgestellt, daß das Merkzeichen für das aktuelle Item bereits den Wert 1 hat, so wird in einem Verfahrensschritt 412 aus dem Speicher 40 der zum Item gehörende Wert gelesen, der dort bei einem früheren Abarbeiten des Verfahrensschritts 410 gespeichert worden ist.

Nach dem Verfahrensschritt 410 bzw. 412 folgt unmittelbar ein Verfahrensschritt 414, in welchem geprüft wird, ob im aktuellen Filter noch weitere Items enthalten sind. Dazu wird beispielsweise der Wert Anz1 verwendet. Enthält der aktuelle Filter noch weitere Items, so folgt unmittelbar nach dem Verfahrensschritt 414 ein Verfahrensschritt 416, in welchem aus der Booleschen-Liste das nächste Item ermittelt wird. Das Verfahren befindet sich nun in einer Schleife aus den Verfahrensschritten 406 bis 416. Diese Schleife wird im Verfahrensschritt 414 erst dann verlassen, wenn mit Hilfe der Booleschen-Liste 150, der Itemliste 180 und gegebenenfalls mit Hilfe der Ausweichliste 210 Werte 0 oder 1 für alle Items des aktuellen Filters berechnet worden sind.

Sind alle Itemwerte festgelegt folgt unmittelbar nach dem Verfahrensschritt 414 ein Verfahrensschritt 418. Im Verfahrensschritt 418 wird aus der zur Booleschen-Liste gehörenden Booleschen-Tabelle für die ermittelten Itemwerte das Ergebnis des Filters ausgelesen.

In einem folgenden Verfahrensschritt 420 wird geprüft, ob der Filterwert 0 oder 1 ist. Beim Filterwert 0 wird im Wertfeld für den aktuellen Filter ebenfalls eine 0 vermerkt, vgl. Verfahrensschritt 422. Hat der Filter den Wert 1, so wird im Wertfeld für den aktuellen Filter der Wert 1 vermerkt, vgl. Verfahrensschritt 424. Nach dem Verfahrensschritt 422 bzw. 424 wird das Verfahren in einem Schritt 426 beendet.

**Patentansprüche**

1. Verfahren zum Betreiben eines Telekommunikationsnetzes,

   bei dem ein Netzelement an einem Netzknoten eines Telekommunikationsnetzes einen Vermittlungsrechner (10) enthält,

   im Vermittlungsrechner (10) Ereignisnachrichten (E) erzeugt werden, die Angaben über beim Betrieb des Netzelements (10) auftretende Ereignisse enthalten,

   eine Ereignisnachricht (E) an mindestens ein vorgegebenes Ziel (Z1 bis Zl) nur dann weitergeleitet wird, wenn mindestens eine für dieses Ziel (Z1) festgelegte Bedingung (F1 bis Fm) durch die Angaben in der weiterzuleitenden Ereignisnachricht (E) erfüllt wird,

   eine Reihenfolge der Ziele (Z1 bis Zl) verwendet wird, in der jedes Ziel (Z1 bis Zl) einmal vorkommt,

   und bei dem in der durch die Reihenfolge vorgegebenen Abfolge für jedes Ziel (Z1 bis Zl) die Bedingung (F1 bis Fm) geprüft wird.

2. Verfahren nach Anspruch 1, dadurch **gekennzeichnet**, daß für mindestens ein Ziel (Z1) mehrere Bedingungen (F1, F2) eines Bedingungssatzes festgelegt sind,

   und daß das Prüfen der Bedingungen (F1,F2) für dieses Ziel (Z1) abgebrochen wird, sobald eine Bedingung (F1, F2) durch die Angaben in der weiterzuleitenden Ereignisnachricht (E) erfüllt ist (Schritt 320).

3. Verfahren nach Anspruch 2, dadurch **gekennzeichnet**, daß die Bedingungen (F1, F2) des Bedingungssatzes in einer Reihenfolge geprüft werden, bei der die Bedingungen danach geordnet sind, wie oft sie durch die Angaben in weiterzuleitenden Ereignisnachrichten (E) erfüllt sind.

4. Verfahren nach einem der vorhergehenden Ansprüche, dadurch **gekennzeichnet,** daß die Reihenfolge der Ziele (Z1 bis Zl) durch eine Liste (52) verketteter Elemente (58 bis 64) festgelegt ist, die zumindest einen Adreßverweis (AV1 bis AV3) auf das nachfolgende Element (60 bis 64) enthalten,

   und daß jedem Element (58 bis 62) der Liste (52) genau ein Ziel (Z1 bis Zl) der Reihenfolge

**5.** Verfahren nach einem der vorhergehenden Ansprüche, dadurch **gekennzeichnet,** daß gemäß mindestens einer Bedingung (F1)aus den Angaben ermittelte Zwischenergebnisse (i1, i2) durch logische Operationen verknüpft werden,

und daß eine Tabelle (230) verwendet wird, in der zu allen Kombinationen von Zwischenergebnissen für die Bedingung (F1), das Verknüpfungsergebnis gespeichert ist (Schritt 418).

**6.** Verfahren nach Anspruch 5, dadurch **gekennzeichnet,** daß beim Prüfen einer Bedingung (F1) ein im Speicher (40) des Rechners (10) für die betreffende Bedingung (F1) gespeichertes Prüfkennzeichen verwendet wird (Schritt 312),

daß ein erster Wert des Prüfkennzeichens angibt, daß die Bedingung (F1) noch nicht geprüft worden ist,

daß ein zweiter Wert des Prüfkennzeichens angibt, daß die Bedingung (F1) bereits geprüft worden ist,

daß beim ersten Wert des Prüfkennzeichens die Bedingung (F1) an Hand der Angaben in der weiterzuleitenden Ereignisnachricht (E) oder anhand bereits ermittelter Zwischenergebnisse (i1, i2) für diese Angaben geprüft wird (Schritt 314), das Prüfergebnis im Speicher (40) vermerkt wird und das Prüfkennzeichen den zweiten Wert erhält (Schritt 316),

und daß beim zweiten Wert des Prüfkennzeichens das im Speicher (40) gespeicherte Prüfergebnis verwendet wird (Schritt 318).

**7.** Verfahren nach Anspruch 5 oder 6, dadurch **gekennzeichnet,** daß beim Ermitteln mindestens eines Zwischenergebnisses (i1, i2) ein im Speicher (40) des Rechners (10) gespeichertes Merkzeichen verwendet wird (Schritt 406),

daß ein erster Wert des Merkkennzeichens angibt, daß das Zwischenergebnis noch nicht ermittelt worden ist,

daß ein zweiter Wert des Merkkennzeichens angibt, daß das Zwischenergebnis bereits ermittelt worden ist,

daß beim ersten Wert des Merkzeichens das Zwischenergebnis anhand der Angaben ermittelt wird (Schritt 408), das Zwischenergebnis im Speicher (10) vermerkt wird (Schritt 410) und das Merkzeichen den zweiten Wert erhält (Schritt 410),

und daß beim zweiten Wert des Merkzeichens das im Speicher (40) gespeicherte Zwischenergebnis verwendet wird (Schritt 412).

**8.** Verfahren nach einem der vorhergehenden Ansprüche, dadurch **gekennzeichnet,** daß die Ziele (Z1 bis Zl) und Bedingungen (F1 bis Fm) mittels mindestens eines Bedienrechners gewartet werden, insbesondere vorgegeben und/oder gelöscht und/oder abgefragt,

und daß beim Warten auf Datenobjekte (12 bis 16) Bezug genommen wird, in deren Daten jeweils mindestens eine Bedingung (F1 bis Fm) und mindestens ein Ziel (Z1 bis Zl) enthalten ist.

**9.** Verfahren nach einem der vorhergehenden Ansprüche, dadurch **gekennzeichnet,** daß die Ziele (Z1 bis Zl) Adressen von anderen Rechnern sind, insbesondere von Bedienrechnern (20) zum Führen des Telekommunikationsnetzes und/oder

daß die Ziele Protokolldateien sind, in denen die Ergebnisnachrichten (E) gespeichert werden.

**10.** Verfahren nach einem der vorhergehenden Ansprüche, dadurch **gekennzeichnet,** daß das Netzelement eine Vermittlungsstelle, ein Cross-Connector oder eine Konzentratoreinheit ist.

**11.** Verfahren nach einem der vorhergehenden Ansprüche, dadurch **gekennzeichnet,** daß das Telekommunikationsnetz ein Festnetz, ein Mobilfunknetz oder ein Netz mit einem Festnetzanteil und einem Mobilfunknetzanteil ist.

**12.** Netzelement zum Betreiben eines Telekommunikationsnetzes, dadurch **gekennzeichnet,** daß es einen Speicher (40) zum Speichern einer Befehlsfolge enthält, bei deren Abarbeiten das Verfahren nach einem der vorhergehenden Ansprüche durchgeführt wird.

Fig.1

| | 52 | | | 72 | 54 | | 56 |
|---|---|---|---|---|---|---|---|

58
70 — AV1 | Ziel Z1 | AVF1 | · | AV3 → 110 | Filter F1 — 100
60
74 — AV2 | Ziel Z2 | AVF2 | 54' | AV4 → 112 | Filter F2 — 102
90
62
78 — AV3 | | | 76 | 0 — 94 | 128
64 — 0 | | | 124 | AV5 → | Filter F3 — 126
80 | · | · | · | 54'' | 0 — 122 | 120

50

Zielliste | Filterliste | Filterdatenliste

40

**Fig.2**

EP 0 939 515 A1

Filterdatenliste

Präfixliste

150

Boolesche-
Liste

Boolesche-
Tabelle

152

172

110

142

UND    242

146

100

ZWO

244    256

148

ITEM   246

182

248    186

Itemliste

ITEM   250    258

254

252

190

240

56

184

ZW2

AID1

188

AWZ1

192
194

ZW3

AID2

196

198

0

204

180

154
156
158

160

162

164

165

168

170

183
200

202

210

ZW1

Anz1=2

Ausweichliste

212

214

216

218

0001  ...    232

...  234

236

238

240

242

244

...  246

230

220

210

40

F1 = UND {i1, i2}

Fig.3

11

Fig.4a

```
        ( Start )────300

          │
   ┌──────────────┐
   │ Initialisierung │────302
   └──────────────┘
          │
   ┌──────────────┐
   │ erste  Zielliste │────304
   │    festlegen     │
   └──────────────┘
          │
   ┌──────────────┐
   │  erstes Ziel der │
   │ aktuellen Zielliste│────306
   │     festlegen     │
   └──────────────┘
          │
   ┌──────────────┐
   │   Filterliste    │
   │ zu aktuellem Ziel │────308
   │    bestimmen     │
   └──────────────┘
          │
   ┌──────────────┐
   │   ersten Filter  │
   │  der aktuellen   │────310
   │ Filterliste bestimmen │
   └──────────────┘
          │
  312 ┌──────────────┐   Nein   ┌──────────────┐
      │ aktueller Filter │──────────│    Berechne    │────314
      │     bereits      │          │  Filter (Fig.5) │
      │  berechnet ?     │          └──────────────┘
      └──────────────┘                    │
          │ Ja                              │
   ┌──────────────┐              ┌──────────────┐
   │    Ergebnis    │              │    Vermerke    │────316
   │     lesen      │              │  Berechnung    │
   └──────────────┘              └──────────────┘
          │
 318 ┌──────────────┐  Nein  ┌──────────────┐  Nein  ┌──────────────┐
     │ Filterbedingung │──────│    Ende der    │──────│ nächsten Filter │────324
     │    erfüllt ?    │      │  Filterliste ? │      │ der Filterliste │
     └──────────────┘        └──────────────┘        └──────────────┘
          │ Ja    320              │ Ja    322
         (A)                      (B)                  (C)  (D)
```

Fig.4b

Fig.5

**Europäisches Patentamt**

# EUROPÄISCHER RECHERCHENBERICHT

Nummer der Anmeldung

EP 98 10 2826

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP 0 687 089 A (HEWLETT PACKARD CO) 13.Dezember 1995 <br> * Spalte 6, Zeile 32 - Spalte 7, Zeile 28 * <br> * Spalte 8, Zeile 45 - Spalte 13, Zeile 1 * <br> * Spalte 20, Zeile 47 - Spalte 24, Zeile 24 * <br> --- | 1,2,5,7, 8,12 | H04L12/24 |
| X | WO 96 24899 A (ERICSSON TELEFON AB L M ;ISRAELSSON PER (SE); ANDERSSON KJELL (SE)) 15.August 1996 <br> * Seite 4, Zeile 26 - Seite 6, Zeile 30 * <br> * Abbildungen 1-10 * <br> --- | 1,2,8,9, 11,12 | |
| X | US 5 594 889 A (COLGATE WILLIAM K ET AL) 14.Januar 1997 <br> * Spalte 1, Zeile 35 - Zeile 67 * <br> * Spalte 2, Zeile 21 - Spalte 3, Zeile 67 * <br> * Abbildung 5 * <br> * Anspruch 4 * <br> --- | 1,8,9,12 | |
| X | WO 93 00632 A (ICL DATA AB) 7.Januar 1993 <br> * Seite 1, Zeile 1 - Seite 6, Zeile 12 * <br> --- | 1,8,12 | RECHERCHIERTE SACHGEBIETE (Int.Cl.6) <br><br> H04L |
| A | US 5 404 532 A (ALLEN WADE C ET AL) 4.April 1995 <br> * Spalte 1, Zeile 16 - Spalte 2, Zeile 59 * <br> * Spalte 3, Zeile 49 - Zeile 63 * <br> * Spalte 5, Zeile 25 - Spalte 6, Zeile 11 * <br> * Spalte 7, Zeile 7 - Zeile 26 * <br> --- | 1-12 | |
| A | US 5 155 842 A (RUBIN DARRYL E) 13.Oktober 1992 <br> * das ganze Dokument * <br> ----- | 1-12 | |

Der vorliegende Recherchenbericht wurde für alle Patentansprüche erstellt

| Recherchenort | Abschlußdatum der Recherche | Prüfer |
|---|---|---|
| DEN HAAG | 20.Juli 1998 | Chassatte, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes Dokument

EPO FORM 1503 03.82 (P04C03)